# EUROPEAN PATENT APPLICATION

(11) **EP 1 239 376 A2**
(43) Date of publication of application: **11.09.2002**
(21) Application number: 01305330.1
(22) Date of filing: 19.06.2001
(51) Int. Cl.: G06F 17/30, G11B 31/00

(54) **Reproducing apparatus and server system providing additional information therefor**

(30) Priority: 10.03.2001 KR 2001012444
(71) Applicant: SAMSUNG ELECTRONICS CO., LTD., Suwon-City, Kyungki-do (KR)
(72) Inventor: Chung, Hyun-kwon, Gwangju-gun, Gyeonggi-do (KR); Heo, Jung-Kwon, 203-504 Jugong 2-danji Apt., Seoul (KR)
(74) Representative: Chugg, David John

(57) **Abstract**

A reproduction apparatus and a server system providing additional information therefor are provided. The reproduction apparatus for reproducing contents includes an identifier generator (11) for generating the identifier of the contents, a network connector (13), and a controller (12) for transmitting the identifier generated by the identifier generator (11) to a server system providing additional information through the network connector (13) and receiving additional information provided from the server system providing additional information through the network connector (13). Accordingly, a reproduction apparatus for providing and receiving additional information on the respective contents through a network are provided.

## Description

The present invention relates to a reproduction apparatus and a server system providing additional information, and more particularly, to a reproduction apparatus for reading contents from storage media and reproducing the read contents and a server system providing additional information that can be connected to the reproduction apparatus through a network.

Digital storage media such as CDS and DVDs, in which various contents such as audio and video information are recorded, are widely used. In particular, audio contents or video contents are recorded in CD-ROMs, DVD-audio, and DVD-videos and the CD-ROMs, the DVD-audio, and the DVD-videos are sold.

There are various additional information items related to the audio contents or the video contents. For example, in the case of music videos, information items such as contents of words of songs, personal information items on singers, contents of recent activities, and other hit songs of a similar genre. However, when a user desires to know such additional information items, the user must access other media.

With a view to solve or reduce the above problems, it is an aim of embodiments of the present invention to provide a server system providing additional information, which is capable of providing and receiving additional information on contents recorded in recording media such as CD-ROMs, DVD-audio, and DVD-videos through a network, and an reproduction apparatus therefor.

It is another aim of embodiments of the present invention to provide a server system providing additional information, which is capable of providing and receiving most recent additional information on the contents recorded in the recording media such as the CD-ROMs, the DVD-audio, and DVD-videos through a network, and a reproduction apparatus therefor.

In another aspect, there is provided a reproduction apparatus for reproducing contents, comprising an identifier generator for generating the identifier of the contents, a network connector and a controller for transmitting the identifier generated by the identifier generator to a server system providing additional information through the network connector and receiving additional information provided from the server system providing additional information through the network connector.

The reproduction apparatus preferably further comprises a reading unit for reading data from storage media, in which the contents are stored. It is preferable that the identifier generator receives an international standard recording code (ISRC) read from the storage media by the reading unit and provides the ISRC as the identifier to the controller.

A browser is preferably installed in the controller. The browser may transmit the identifier to a server installed in the additional information service server system, receives additional information provided from the server, and displays the additional information.

The reproduction apparatus may further comprise a reading unit for reading the contents from recording media in which the contents are stored and a reproducer for reproducing contents read by the reading unit.

The reproducer may further comprise a decoder for decoding read contents, a speaker for receiving audio data output from the decoder and delivering sound, and a display apparatus for receiving video data output from the decoder and displaying images.

According to another aspect of the present invention, there is provided a server system providing additional information, comprising an additional information database in which additional information items with respect to a plurality of contents are stored and a server for receiving an identifier with respect to predetermined contents from a reproduction apparatus for reproducing the contents, receiving additional information corresponding to the identifier from the additional information data base, and transmitting the additional information to the reproduction apparatus.

An ISRC code is preferably recorded in recording media in which the contents are recorded. It is preferable that the server receives the ISRC code as the identifier, receives additional information mapped to the ISRC code from the additional information data base, and transmits the additional information to the reproduction apparatus.

The reproduction apparatus preferably comprises an identifier generator for generating the identifier of the contents, a network connector, and a controller for transmitting the identifier generated by the identifier generator to a server system providing additional information through the network connector, receiving the additional information provided from the additional information service server system through the network connector, and displaying the additional information. The reproduction apparatus preferably further comprises a reading unit for reading data from storage media, in which the contents are stored. It is preferable that the identifier generator receives the ISRC code read from the storage media and provides the ISRC code to the controller.

For a better understanding of the invention, and to show how embodiments of the same may be carried into effect, reference will now be made, by way of example, to the accompanying diagrammatic drawings in which:
Figure 1 schematically shows a reproduction apparatus and a server system providing additional information therefor according to a preferred embodiment of the present invention;
Figures 2 and 3 show the structure of data stored in an additional information data base 101 according to a preferred embodiment of the present invention;
Figure 4 is a flowchart of processes of a reproduction apparatus displaying additional information; and
Figure 5 is a flowchart of processes of a server system providing additional information providing additional information.

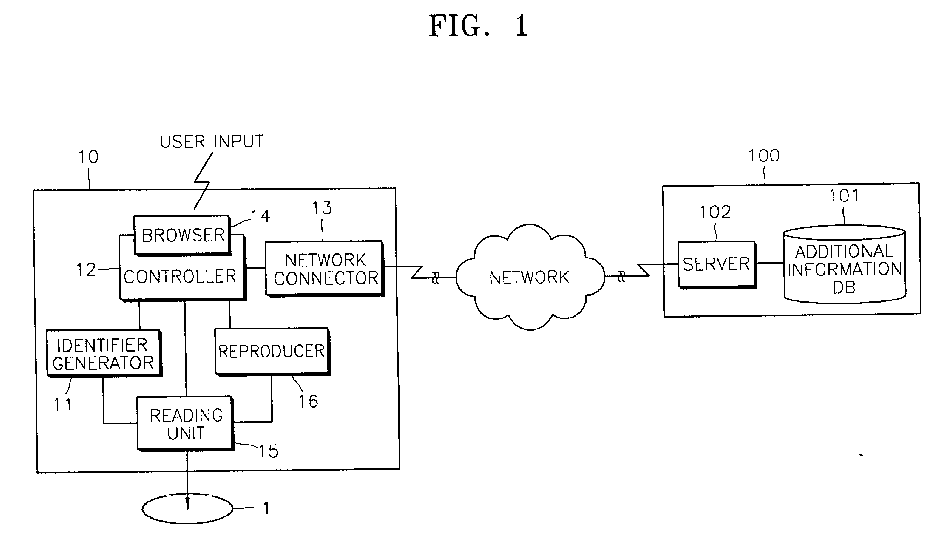

Figure 1 schematically shows a reproduction apparatus and a server system providing additional information therefor according to a preferred embodiment of the present invention.

One or more contents #1, #2, ..., and #N and an international standard recording code (ISRC) given to the contents are recorded in an optical disc 1, which is a recording medium according to the present embodiment. The ISRC code is an international standard code used for distinguishing music, songs, music videos and is given by the Recording Industry Association of America (RIAA). The ISRC code includes country code, copyright holder code, year of recording, and recording number.

A reproduction apparatus 10 includes an identifier generator 11, a controller 12, a network connector 13, a reading unit 15, and a reproducer 16.

The identifier generator 11 generates an identifier with respect to the contents recorded in the storage medium 1. The identifier generated according to the present invention is the ISRC code. The ISRC code is read from the optical disc 1 by the reading unit 15 and is provided to the identifier generator 11. The network connector 13, which is a connection interface to be connected to the Internet, transmits predetermined information to the network or receives predetermined information from a network. A browser 14 for searching information stored in a server system providing additional information 100 is installed in the controller 12. The browser 14 denotes a user interface for reading a file on a line. The browser 14 according to the present invention, which is a web browser, transmits information to a server 102 installed in the server system providing additional information 100 and receives information from the server 102 installed in the server system providing additional information 100 to be described more fully later. The web browser is a client program using an Internet protocol such as a hypertext transfer protocol (HTTP) and a file transfer protocol (FTP) in order to request material from a web server.

The reading unit 15 reads contents from the optical disc 1. The reproducer 16 reproduces the contents read by the reading unit 15. For this, the reproducer 16 can further include a decoder (not shown) for decoding the read contents, a speaker (not shown) for receiving audio data output from a decoder and delivering sound, and a display apparatus for receiving video data output from the decoder and displaying images. The speaker and/or display apparatus may not be included in the reproducer 16 and may be realized separately from the reproduction apparatus 10, if necessary.

The server system providing additional information 100 includes an additional information database 101 and a server 102. In addition to the contents recorded in the optical disc 1, additional information items on various contents are stored in the additional information database 101 to correspond to the ISRC code. Detailed description of additional information will be described later.

The server 102 receives an identifier on predetermined contents from the reproduction apparatus 10, extracts additional information corresponding to the identifier from the additional information database 101, and transmits the additional information to the reproduction apparatus 10. The server 102, which is a program for responding to requests from client programs (the browser 14 in the present embodiment) in a client/server model, is a server program for providing web pages or files requested from the browser 14 when it comes to a web server according to the present embodiment.

The server 102 transmits information to the browser 14 and receives information from the browser 14 through a "Cookie" file. The Cookie file is a text file stored in a client. In the present embodiment, the Cookie file is prepared by the browser 14 and is stored. The browser 14 stores the Cookie file, which includes the ISRC code in a memory (not shown) included in the controller 12. The Cookie file is usually stored in the directory used by the browser 14. To be more specific, the browser 14 receives the identifier generated by the identifier generator 11, that is, the ISRC code and stores the ISRC code in the Cookie file. The server 102 reads the Cookie file, identifies the ISRC code, extracts additional information corresponding to the ISRC code from the additional information database 101, and transmits the additional information to the reproduction apparatus 10.

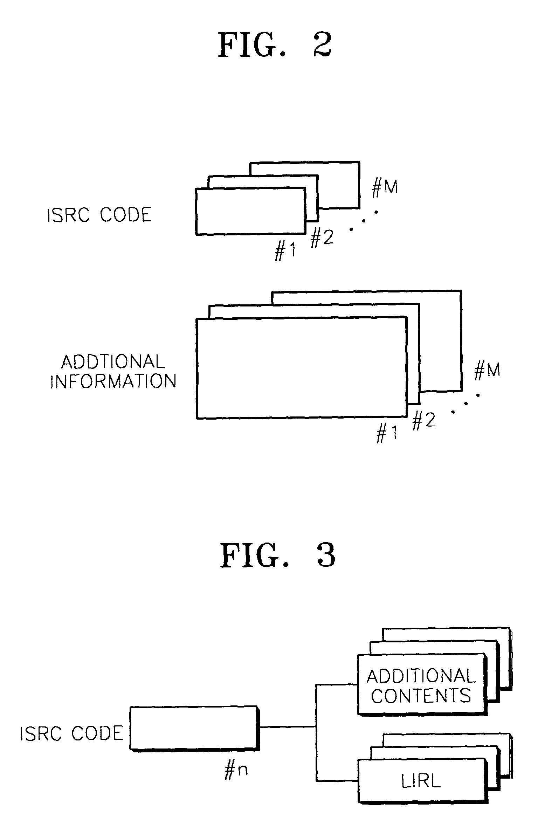

Figure 2 shows the structure of data stored in the additional information database 101 according to the preferred embodiment of the present invention.

Referring to Figure 2, a plurality of ISRC codes and additional information items corresponding to the plurality of ISRC codes are stored in the additional information database 101. The additional information database 101 may be realized by a relational database in the form of tables defined to access or reconstruct data by various methods. The additional information database 101 can consist of a distribution type database, in which data items are distributed in various points on a network, or an object-oriented data base, in which data defined by an object class and a sub class are consistent with each other.

Referring to Figure 3, additional information is prepared so as to correspond to the ISRC code and includes one or more uniform resource locators (URL) as a plurality of additional contents file and/or link information. The URL indicates the positions of resources, which can be accessed on the Internet. The URL consists of protocol names for accessing resources, domain names for distinguishing specific computers on the Internet, and path names for hierarchically showing the positions of files.

Processes of displaying additional information items and a method for providing the additional information items according to the present invention will now be described.

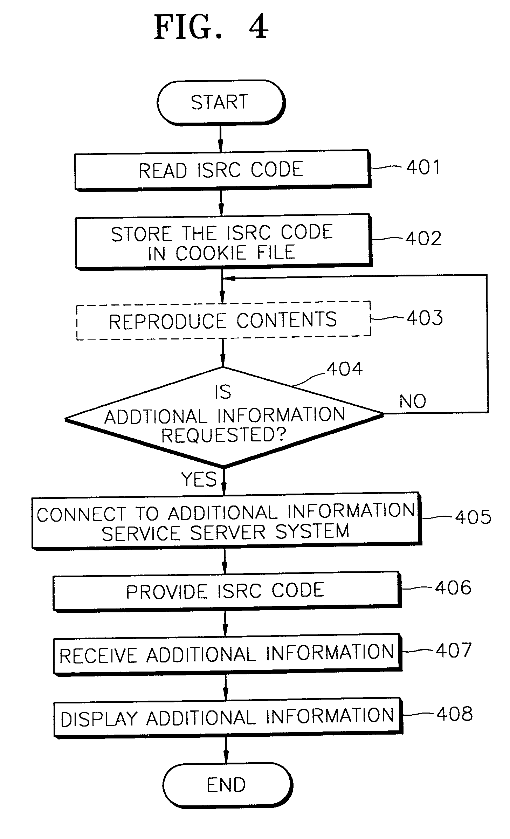

Figure 4 is a flowchart of processes of the reproduction apparatus 10 displaying the additional information items.

Referring to Figure 4, when the optical disc 1 is inserted into the reproduction apparatus 10, the reading unit 15 reads the ISRC code from the optical disc 10 and transmits the ISRC code to the identifier generator 11 (step 401).

The identifier generator 11 transmits the ISRC code to the controller 12 and the browser 14 installed in the controller 12 stores the received ISRC code in the Cookie file (step 402).

When a user input is received in the controller 12, the reading unit 15 reads corresponding contents and the reproducer 16 reproduces the read contents (step 403). When the user input requesting the additional information items is received in the controller 12 during the reproduction of the contents (step 404), the browser 14 installed in the controller 12 is called and connected to the server system providing additional information 100 through the network connector 13 (step 405).

The browser 14 provides the ISRC code stored in the Cookie file to the server 102 of the server system providing additional information 100 (step 406). The browser 14 receives the additional information provided from the server 102 (step 407) and displays the received additional information items (step 408). The step 403 can be omitted. Namely, the user can request additional information items on specific contents when the contents are not reproduced. In this case, when the user requests the additional information items, the controller 12 (or the browser 14) displays menu screens with respect to all the contents recorded in the optical disc 1. The additional information items are provided by the browser 14 providing the ISRC code with respect to the selected contents to the server 102 when the user selects the specific contents.

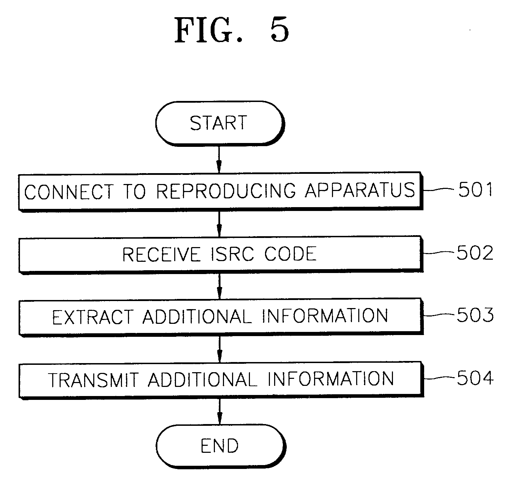

Figure 5 is a flowchart of processes of the additional information service server system 100 providing additional information.

Referring to Figure 5, the server 102 of the additional information service server system 100 is connected to the reproduction apparatus 10 through the network (step 501). The server 102 requests the ISRC code to the browser 14 installed in the reproduction apparatus 10 and receives the ISRC code (step 502). The server 102 extracts corresponding additional information from the additional information data base 101 on the basis of the received ISRC code (step 503) and transmits the extracted additional information to the browser 14 (step 504).

In the above embodiment, the identifier generator 11 receives the ISRC code read from the optical disc 1 by the reading unit 15. However, the identifier generator 11 can be realized so as to receive the header information of the contents recorded in the optical disc 1 and to generate a predetermined identifier on the basis of the header information. Also, additional information may be stored in the additional information database 101 of the server system providing additional information 100 to correspond to the new identifier.

As mentioned above, according to embodiments of the present invention, a server system providing additional information, which is capable of providing and receiving the additional information items on the respective contents through the network, and a reproduction apparatus therefor are provided. Accordingly, the user can receive the most recent additional information with respect to the specific contents.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extend to any novel one, or any novel combination, of the features disclosed in this specification (including any accompanying claims, abstract and drawings), or to any novel one, or any novel combination, of the steps of any method or process so disclosed.

## Claims

1. A reproduction apparatus for reproducing contents, comprising:
an identifier generator (11) for generating the identifier of the contents;
a network connector (13); and
a controller (12) for transmitting the identifier generated by the identifier generator to a server system (100) providing additional information through the network connector (13) and receiving additional information provided from the server system providing additional information through the network connector.

2. The apparatus of claim 1, further comprising a reading unit (15) for reading data from storage media (1), in which the contents are stored,
wherein the identifier generator (11) receives the identifier read from the storage media (1) by the reading unit (15) and provides the read identifier to the controller (12).

3. The apparatus of claim 2, wherein the identifier comprises an international standard recording code (ISRC) recorded in the recording media.

4. The apparatus of claim 1, wherein a browser (14) is installed in the controller (12) and wherein the browser (14) transmits the identifier to a server (102) installed in the additional information service server system (100), receives additional information provided from the server (102), and displays the additional information.

5. The apparatus of claim 4, wherein the browser (12) stores the identifier in a Cookie file and transmits the Cookie file to a server installed in the server system (100) providing additional information.

6. The apparatus of claim 1, further comprising:
a reading unit (15) for reading the contents from recording media in which the contents are stored; and
a reproducer (16) for reproducing contents read by the reading unit (15).

7. The apparatus of claim 6, wherein the reproducer (16) further comprises a decoder for decoding read contents.

8. The apparatus of claim 7, wherein the reproducer (16) further comprises:
a speaker for receiving audio data output from the decoder and delivering sound; and
a display apparatus for receiving video data output from the decoder and displaying images.

9. A server system providing additional information, comprising:
an additional information database (101) in which additional information items with respect to a plurality of contents are stored; and
a server (102) for receiving an identifier with respect to predetermined contents from a reproduction apparatus for reproducing the contents, receiving additional information corresponding to the identifier from the additional information data base, and transmitting the additional information to the reproduction apparatus.

10. The server system providing additional information of claim 9, wherein an ISRC code is recorded in recording media in which the contents are recorded and wherein the server receives the ISRC code as the identifier, receives additional information mapped to the ISRC code from the additional information data base, and transmits the additional information to the reproduction apparatus.

11. The server system providing additional information of claim 9, wherein the reproduction apparatus comprises:
an identifier generator (11) for generating the identifier of the contents;
a network connector (13); and
a controller (14) for transmitting the identifier generated by the identifier generator to a server system (100) providing additional information through the network connector, receiving the additional information provided from the additional information service server system through the network connector, and displaying the additional information.

12. The server system providing additional information of claim 10, wherein the reproduction apparatus (16) comprises:
an identifier generator (11) for generating an identifier of the contents;
a network connector (13); and
a controller (12) for transmitting the identifier generated by the identifier generator to a server system providing additional information through the network connector, receiving additional information provided from the server system providing additional information through the network connector, and displaying the additional information.

13. The server system providing additional information of claim 12, wherein the reproduction apparatus further comprises a reading unit (15) for reading data from storage media (1), in which the contents are stored and wherein the identifier generator receives the ISRC code read from the storage media and provides the ISRC code to the controller.

14. The server system providing additional information of claim 13, wherein a browser (14) is installed in the controller and wherein the browser (14) transmits the identifier to the server, receives the additional information provided from the server, and displays the additional information.

15. The server system providing additional information of claim 14, wherein the browser (12) stores the identifier in a Cookie file and transmits the Cookie file to the server.

16. The server system providing additional information of claim 15, wherein the reproduction apparatus (16) further comprises:
a reading unit (15) for reading the contents from recording media in which the contents are stored; and
a reproducer (16) for reproducing the contents read by the reading unit.

17. The server system providing additional information of claim 16, wherein the reproducer (16) further comprises a decoder for decoding the read contents.

18. The server system providing additional information of claim 17, wherein the reproducer further comprises:
a speaker for receiving audio data output from the decoder and transmitting sound; and
a displaying apparatus for receiving video data output from the decoder and displaying images.
